## Europäisches Patentamt

## European Patent Office

## Office européen des brevets

(19)

(11) Veröffentlichungsnummer: **0 233 205**
**B1**

(12) # EUROPÄISCHE PATENTSCHRIFT

(45) Veröffentlichungstag der Patentschrift:
**04.10.89**

(21) Anmeldenummer: **86904073.3**

(22) Anmeldetag: **30.07.86**

(86) Internationale Anmeldenummer:
**PCT/CH 86/00111**

(87) Internationale Veröffentlichungsnummer:
**WO 87/01082 (26.02.87 Gazette 87/05)**

(51) Int. Cl.⁴: **B 62 D 57/02**

(54) **GELÄNDEGÄNGIGES FAHRZEUG.**

(30) Priorität: **13.08.85 CH 3476/85**

(43) Veröffentlichungstag der Anmeldung:
**26.08.87 Patentblatt 87/35**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**CH-A-93 455**
**FR-A-1 602 390**
**FR-A-2 403 261**
**FR-A-2 418 106**
**GB-A-306 365**
**US-A-3 449 769**
**US-A-3 631 542**

**Robotics Age, no.5, Sept.-Oct.1983, Petersborough, N.H.(US),M.Russell Jr:"Odex I, the first functionoid", p.12-18**
**Scientific American, Jan.1983 (US), M.H.Raibert et al:"Machines that walk", p.32-41**

(73) Patentinhaber: **WERDER, Martin, Luggwegstrasse 23, CH- 8048 Zürich (CH)**

(72) Erfinder: **WERDER, Martin, Luggwegstrasse 23, CH- 8048 Zürich (CH)**

(74) Vertreter: **Feldmann, Clarence Paul, c/o Patentanwaltsbüro FELDMANN AG Postfach Kanalstrasse 17, CH- 8152 Glattbrugg (CH)**

## Beschreibung

Die Erfindung bezieht sich auf ein geländegängiges Fahrzeug für schreitende Fortbewegung. Ein derartiges, mit vier Schreitbeinen versehenes Fahrzeug ist aus der europäischen Patentanmeldung No. 0 074 286 der International Robotic Engineering Inc. bekannt geworden. Die US-PS-4 202 423 (Sote) zeigt ein Fahrzeug das sogar sechs Schreitbeine hat. Eine dem Gelände angepasste Bewegung der Schreitbeine bedingt eine sehr aufwendige Steuerung.

Sehr viel einfacher im Aufbau und der Steuerung ist der fahrbare Löffelbagger nach der CH-PS-508 786 (Menzi AG). Der Bagger hat zwei höhenverstellbare, antriebslose Räder und kann sich mit Hilfe seines Baggerarmes selbsttätig fortbewegen. Die Fortbewegung ist aber nicht kontinuierlich, da das Gerät nach jedem Schritt zuerst auf seinen Pratzen abgestützt werden muss, bevor ein nächster Schritt gemacht werden kann.

Die Erfindung stellt sich zur Aufgabe, ein geländegängiges Fahrzeug für schreitende Fortbewegung zu schaffen, das in seinem Aufbau und seiner Steuerung einfacher ist als die bekannten Fahrzeuge, die vier oder sechs Schreitbeine aufweisen.

Die Erfindung löst diese Aufgabe mit einem Fahrzeug, das die Merkmale des Patentanspruches 1 aufweist.

Eine erhebliche Vereinfachung kann dadurch erzielt werden, dass die Bewegungen der beiden Schreitbeine durch den Fahrer von Hand gesteuert werden. Der Bordcomputer dient zur Überwachung der Stabilität, verhindert falsche Bewegungsschritte und steuert die Lage der Räder bezüglich dem Rahmen des Fahrzeuges.

Für die Handsteuerung sind spezielle Handsteuerorgane geschaffen worden, die die Merkmale des Patentanspruches 5 aufweisen.

Bei dieser einfachsten Ausführungsform wird die Fortbewegung des Fahrzeuges lediglich durch die Bewegung der Schreitarme bewirkt. Dabei rollen die Räder und werden automatisch entsprechend der Stabilitätslage in ihrer Lage bezüglich dem Fahrzeugrahmen verstellt.

In der beigefügten Zeichnung sind Ausführungsbeispiele des Erfindungsgegenstandes vereinfacht dargestellt. Es zeigen:

Figur 1　ein geländegängiges Fahrzeug in perspektivischer Darstellung;

Figur 2　den Fahrersitz des Fahrzeuges nach Figur 1 mit den Hand-Steuerorganen und Figur 2a Details desselben in perspektivischer Darstellung;

Figur 3　eine Variante des Fahrzeuges nach Figur 1;

Figur 4　ein Blockschema für die Steuerung

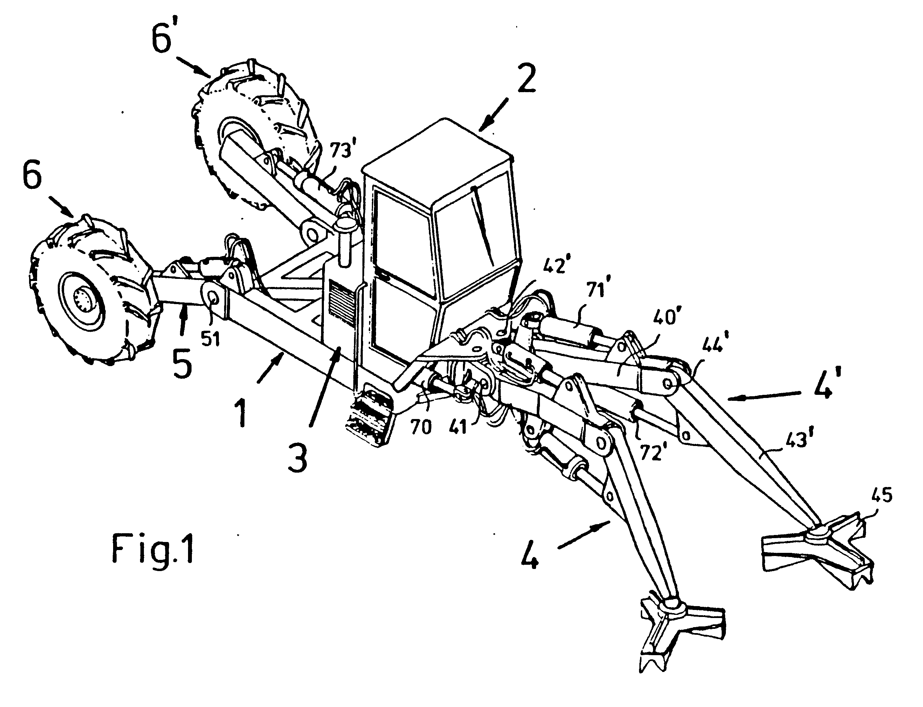

Figur 1 zeigt den generellen Aufbau des Fahrzeuges mit einem Rahmen 1, einer Kabine 2, einem Motorgehäuse 3, vorne am Rahmen angelenkten Schreitbeinen 4, 4' und die beiden hinten am Rahmen angelenkten Schwingarme 5 mit den antriebslosen Rädern 6. Die Räder 6 können dabei mit einer Betriebs- und Feststellbremse ausgerüstet sein. Der Rahmen ist ein diagonal verstärkter, steifer Kastenrahmen, an dem die Oberschenkel 40 mittels Doppelgelenken um eine horizontale Achse 41 und um eine vertikale Achse 42 schwenkbar angelenkt sind.

Am äusseren Ende der Oberschenkel 40 sind die Unterschenkel 43 um eine horizontale Achse 44 schwenkbar angelenkt. Die Unterschenkel tragen an ihrem freien Ende allseitig schwenkbare Pratzen 45. Die Schreitbeine erhalten ihre Verstell- und Antriebskräfte aus hydraulischen Einzelantriebelementen mit doppelt beaufschlagbaren Kolben und Zylindern mit integrierter Längenmessung. Jedes der beiden Schreitbeine ist gleichartig ausgebildet. Die einzelnen Teile des rechten Schreitbeines sind mit normalen Bezugszeichen - diejenigen des linken Beines mit apostrophierten Bezugszeichen versehen.

Das hydraulische Antriebselement 70 dient der seitlichen Schwenkung des Schreitbeines 4, Element 71' dient dem Heben und Senken des Oberschenkels 40' und Element 72' der Vorwärts- oder Rückwärtsschwenkung des Unterschenkels 43'.

An der Rückseite des Rahmens sind die beiden Schwingarme 5, 5' angelenkt, die je für sich um eine horizontale Achse 51 schwenkbar sind. Hydraulische Antriebselemente 73' liefern die Verstellkräfte für die Schwingarme 5, 5'.

Die Fortbewegung des Fahrzeuges über unebenes Gelände ermöglichen die Schreitbeine, deren Bewegungen von einem Fahrer von Hand gesteuert werden, wobei ein später (zu beschreibender) Bordcomputer mithilft und dafür sorgt, dass keine die Stabilität gefährdenden Schritte gemacht werden können. Er sorgt auch für eine automatische Verstellung der Schwingarme 5 mit den Rädern 6. Diese werden bei einer einfachsten Ausführung vom Computer so gesteuert, dass der Rahmen 1 stets in horizontaler Lage bleibt. Gelangt beispielsweise Rad 6 in eine Bodenvertiefung, sorgt der Computer dafür, dass der Schwingarm 5 mit Rad 6 sich senkt, bis der Fahrzeugrahmen keine Seitenneigung mehr aufweist.

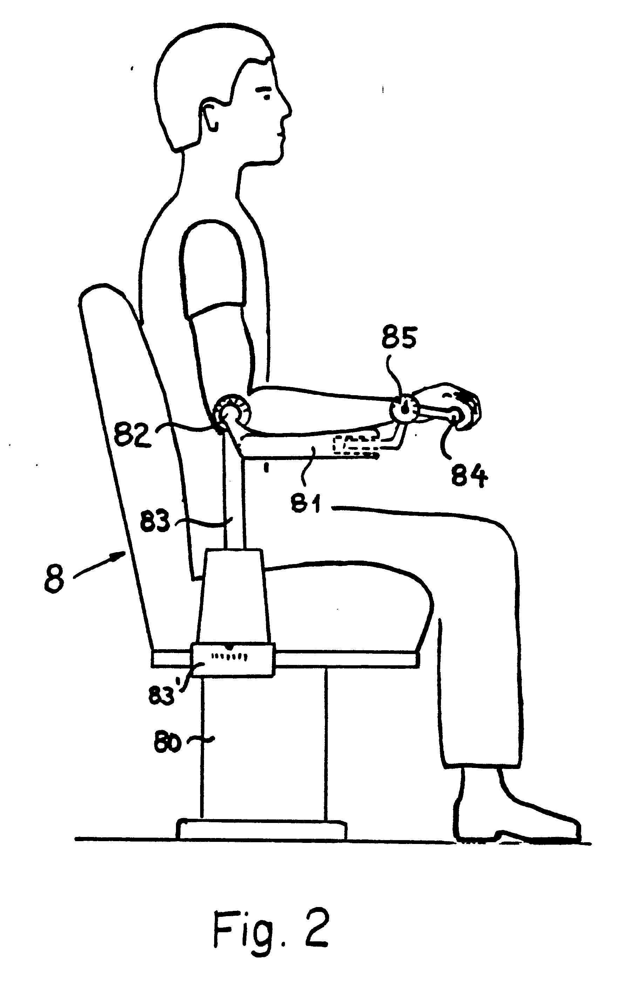

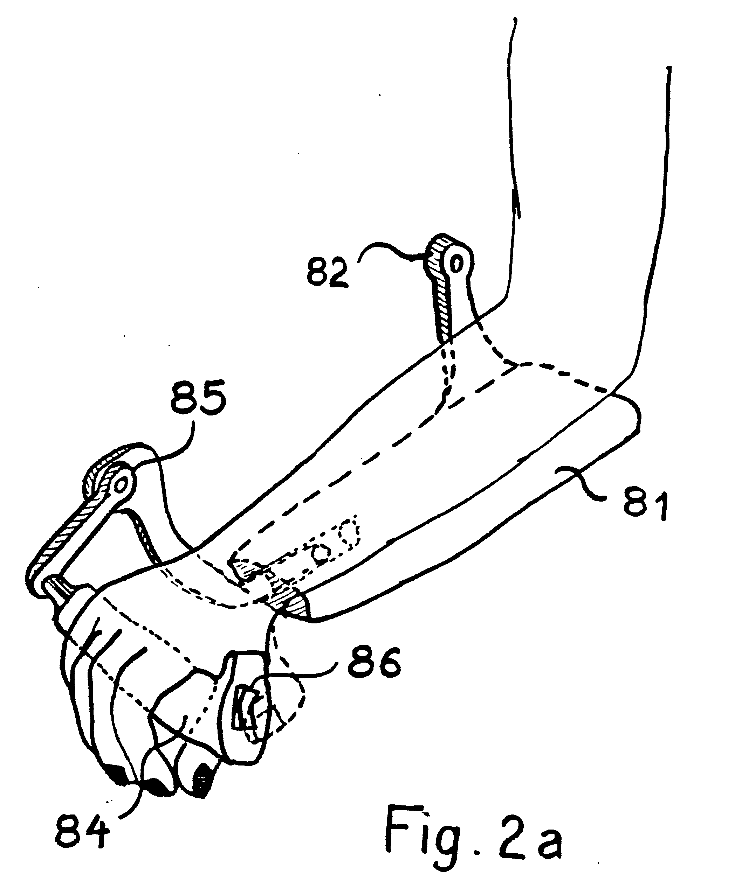

Im Folgenden werden zunächst die Handsteuerorgane an Hand der Figur 2 beschrieben, während zum Schluss an Hand eines Blockschemas die Wirkungsweise des Computers erläutert wird.

Figur 2 zeigt einen Sessel 8 für den Führer des Fahrzeuges. Der Sessel als Ganzes ist auf der Säule 80 schwenkbar, damit der Führer nach allen Seiten sehen kann. Am Sessel sind beidseitig die Steuerorgane für die Schreitbeine angebracht. Die auf der rechten Seite angeordneten Organe dienen der Steuerung des rechten Schreitbeines 4, die links angeordneten dienen der Steuerung des linken Schreitbeines 4'. Die nachfolgende Beschreibung bezieht sich auf die in der Zeichnung sichtbaren rechten Organe, die linksseitigen Organe sind spiegelbildlich gleich ausgeführt. Die eigentliche Steuerung geschieht mit dem Unterarm und der Hand des Fahrzeugführers. Sein Unterarm ist dazu in einer Unterarmstütze 81 eingebettet, die um ein Gelenk 82 auf- und abwärts schwenkbar ist, dessen Drehachse sich in der Verlängerung der Ellbogenachse des Fahrzeuglenkers befindet. Die Höhe der Unterarmstütze ist der Grösse des Lenkers anpassbar. Dazu dient die Verstellsäule 83. Vorne an der Unterarmstütze ist ein Griff 84 angebracht, der um ein Gelenk 85 schwenkbar ist. Der Abstand zwischen dem Ellenbogen und der Hand ist ebenfalls der Grösse des Lenkers anpassbar. In den Gelenken 82 und 85 sind Drehwinkel-Signalgeber untergebracht. Eine Schwenkung um das Gelenk 82 hat ein Heben oder Senken des rechten Schreitbein-Oberschenkels 40, eine Schwenkung des Griffes 84 hat eine Vorwärts- oder Rückwärtsschwenkung des Unterschenkel 43 des rechten Schreitbeines zur Folge.

Statt dessen kann die Schwenkung am Handgriff 84 zur horizontalen Bewegung des Schreitbeinfusses und ein Schwenken am Gelenk 82 zur Erzeugung einer vertikalen Bewegung des Schreitbeinfusses dienen, wobei der Bordcomputer die entsprechenden Steuerbefehle an beide Antriebszylinder 71' und 72' errechnen müsste.

Die seitliche Bewegung eines Schreitbeines muss immer sehr langsam und vorsichtig erfolgen, damit das Fahrzeug nicht seine Stabilität verliert und kippt. Für diese seitliche Schwenkung des Schreitbeines sind daher am Griff 84 zwei Druckknöpfe oder ein Kippschalter 86 für eine langsame Schwenkung nach links oder rechts angebracht, die der Fahrer mit dem rechten bzw. linken Daumen betätigt.

Stattdessen könnte eine Rechts- oder Linksschwenkung auch durch eine entsprechende Drehung der Unterarmstütze um die Verstellsäule 83 erfolgen, die einen Signalgeber 83' betätigen könnte.

Da dann die Gefahr besteht, dass der Lenker zu grosse und zu brüske Schwenkbewegungen ausführt, könnte die Übertragung auf die Antriebselemente entsprechend untersetzt und verzögert erfolgen. Da aber trotz allen Vorsichtsmassnahmen das Fahrzeug bei seiner Fortbewegung ein wenig schwankt, wird der Druckknopfsteuerung den Vorzug gegeben.

Sämtliche Gelenke der Steuerorgane sind mechanisch gedämpft, um ungewollte selbsttätige Bewegungen der Schreitbeine beim Loslassen der Steuerorgane zu verhindern.

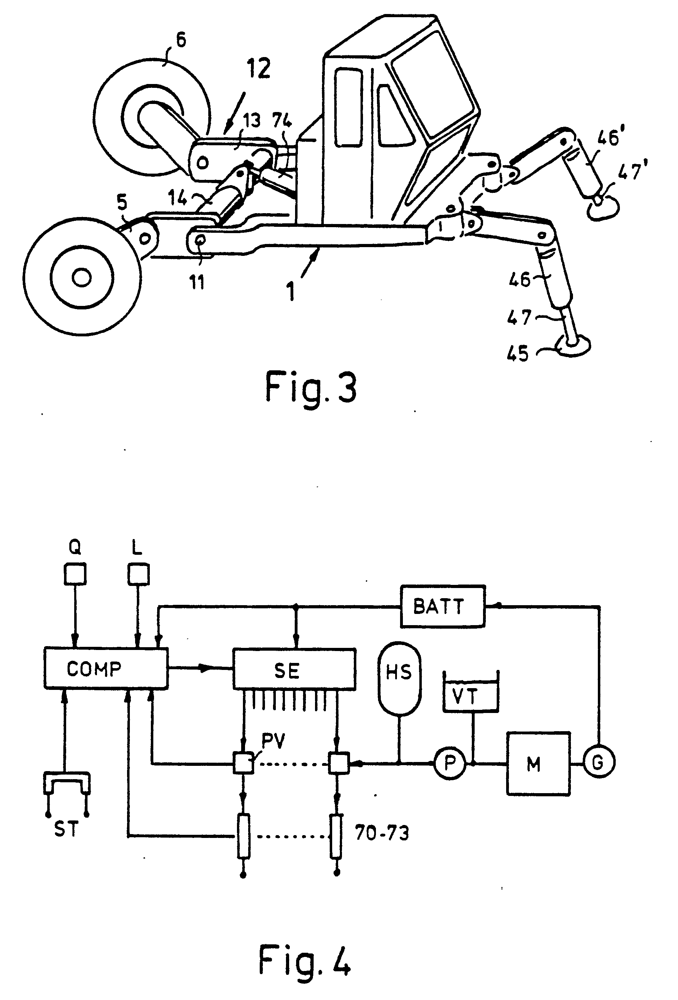

Die Steuerung wirkt nicht direkt auf die hydraulischen Antriebselemente 70 - 72 ein. Sämtliche Steuersignale gehen zuerst über den Bordcomputer, wie dies aus dem Blockschema Figur 4 ersichtlich ist. Die von den Handsteuerorganen ST ausgehenden Steuersignalimpulse gelangen zum Bordcomputer "COMP", der sie nach Beurteilung ihrer Zulässigkeit an die Servo-Elektronik SE weiterleitet, wo die Signale verstärkt und die entsprechenden Proportional - Mengenventile gesteuert betätigt werden, die den hydraulischen Antriebselementen 70 - 73 Hydrauliköl unter Druck zuführen oder aus diesen ablassen. Der Bordcomputer steuert automatisch und ohne Zutun derart, dass der Rahmen sich immer wieder auf eine horizontale Lage einstellt. Dazu können zwei ölgedämpfte kontaktlose Pendel - Potentiometer dienen, ein Potentiometer Q für die Querneigung und ein Potentiometer L für die Längsneigung des Fahrzeugrahmens.

Die Steuerimpulse dieser beiden Potentiometer gelangen über den Bordcomputer zur Servo-Elektronik, von dort zu den Proportionalmengenventilen PV und diese verstellen mit Hilfe der hydraulischen Antriebselemente 73, 73' einen oder beide Schwingarme 5, wie dies von Fall zu Fall zur Einhaltung der horizontalen Lage erforderlich ist.

Sämtliche hydraulische Antriebselemente sind mit elektrischen Positionsrückmeldeorganen versehen, die dem Computer anzeigen, ob der jeweilige Steuerbefehl ausgeführt wurde. Für analoge Steuer- oder Rückmeldeimpulse ist dem Computer ein (nicht dargestellter) Analog-Digital-Umwandler vorgeschaltet. Der Bordcomputer enthält auch einen vorprogrammierten Rechner, der laufend errechnet, ob die senkrechte Projektion des Schwerpunktes des Fahrzeuges sich noch innerhalb der Durchschnittsfläche der beiden durch das Radpaar und je ein Schreitbein gegebenen Auflagedreiecke befindet. Ist dies nicht der Fall, wird automatisch die angefangene Abhebbewegung eines Schreitbeines gestoppt und der Lenker erhält ein Warnsignal.

Der Bordcomputer kann auch ein Programm unter Umgehung der Handsteuerung für Geradeausfahrt auf ebenem Gelände enthalten.

Der Bordcomputer kann ebenso mit Programmen und Algorithmen versehen sein, die eine dynamische Bewegungskontrolle, beispielsweise für die Anwendung eines Galoppschrittes, ermöglichen, wobei das Fahrzeug zeitweise nur noch mit den Rädern Bodenkontakt besitzt, während beide Beine in der Rückstellphase in der Luft sind.

Ein weiteres Programm erlaubt die Spreizung der Schreitbeine mit automatischer Nivellierung des Rahmens, damit dieser eine Arbeitsplattform für einen Bagger, einen Mobilseilkran oder eine andere stationäre Arbeitsmaschine bildet.

Das Blockschema zeigt auch die fahrzeugeigene Energiequelle zur Steuerung und Fortbewegung des Fahrzeuges. Ein Verbrennungsmotor M treibt eine Pumpe P, die den Hochdruck-Hydraulik-Ölspeicher S unter Druck hält, damit Öl unter Druck sofort zur Verfügung steht. Die Pumpe saugt aus dem Vorratstank VT an, in den auch das aus den hydraulischen Antriebselementen 70 - 73 ausgelassene Öl zurückfliesst. Ferner treibt der Motor M einen Generator G, der die Batterie "BATT" auflädt. Die Batterie liefert die elektrische Energie für den Bordcomputer, die Servo-Elektronik und die elektrisch betätigten Ventile PV.

Figur 3 zeigt eine Variante zu dem in Figur 1 dargestellten Fahrzeug. Der Rahmen dieses Fahrzeuges ist um die Achse 11 knick-verstellbar. Dies erlaubt ein höheres Anheben des Rahmens. Die hintere Partie des Rahmens ist als Ganzes mit 12 bezeichnet. Sie umfasst zwei Träger 13, die durch ein Rohr 14 zu einem starren, U-förmigen Rahmenteil miteinander verbunden sind. An die Träger 13 sind wie bei Figur 1 die schwenkbaren Schwingarme 5 mit den Rädern 6 angelenkt. Die Zeichnung nach Figur 3 ist stark vereinfacht, indem hier die hydraulischen Antriebselemente weggelassen sind. Einzig das neu hinzukommende Antriebselement 74 ist dargestellt.

Aus dem vorerwähnten Grund, den Rahmen höher anheben zu können, sind hier die Unterschenkel 46, 46' der Schreitbeine mit einem zusätzlichen, ausfahrbaren Teil 47, 47' versehen. Bei dem in Figur 3 dargestellten Fahrzeug sind dazu die Unterschenkel selber als hydraulische Antriebe ausgebildet. Die Pratzen 45 sind darum an der ausfahrbaren Kolbenstange 47 dieser Antriebselemente gelenkig und selbsteinstellend angebracht.

Das Fahrzeug ist für Fahrten in unwegsamem, kupiertem Gelände, beispielsweise für den Forstbetrieb, geeignet. Die besondere Konstruktion des Fahrzeuges ermöglicht Fahrten im steil geneigten Gelände. Bis zu einem gewissen Grad können auch Gräben oder Geländestufen überwunden werden. Das Fahrzeug kann wenn nötig auf der Stelle durch mehrere Einzelschritte gewendet werden.

Zum Aufladen einer Last auf den Rahmen oder zum Anbau von speziellen Arbeitsgeräten kann dieser abgesenkt werden, indem das Fahrzeug "in die Knie geht". Infolge des automatischen Ausgleichs der Horizontallage senkt sich dabei auch der rückseitige Teil des Fahrzeuges.

Eine entsprechende Bewegung der Schreitbeine ermöglicht auch eine Rückwärtsfahrt.

Das Fahrzeug erlaubt verschiedene Fortbewegungsarten. Der Fahrer kann das Fahrzeug entweder an einem vorderen Bein nachziehen, wobei das andere Bein hochgezogen ist, oder auch beide Beine abstützen und das Fahrzeug mittels beiden Beinen nachziehen.

Ist das Fahrzeug an einem Ort angelangt, an dem es im Stillstand eine möglichst grosse Standfestigkeit haben soll, so werden die Beine soweit geknickt, bis die Unterseite des Fahrzeuges am Boden aufliegt, wobei ja durch die automatische Steuerung die Räder selbsttätig folgen. Dadurch ist es möglich, die Schreitbeine nacheinander weit zu spreizen und nachher das Fahrzeug wieder leicht anzuheben.

Die vom Computer auszuführende Spannung eines Schreitbeines, bis es den nötigen Auflagedruck auf dem Gelände hat, kann mittels Sensoren oder auch mittels einer einfachen Druckmessung in einem Zylinder, beispielsweise Zylinder 71 beziehungsweise 71' erfolgen.

Ferner besteht die Möglichkeit, einen Teil der automatischen Steuerung abzuschalten, so dass nur noch die automatische Horizontaleinstellung verbleibt.

Die Steuerautomatik beschränkt sich dann auf die automatische Horizontaleinstellung des Fahrzeuges. Alle übrigen Manöver bleiben dann dem Fingerspitzengefühl des Fahrers überlassen.

Wenn die von den Schreitbeinen auf den Boden übertragenen Kräfte in schwierigen Fahrsituationen nicht mehr genügen, um das Fahrzeug von der Stelle zu bewegen, können die Schwingarme (5, 5') bei gleichzeitig blockierten Rädern für die Fortbewegung zu Hilfe genommen werden.

Diese Schrittart, die wir als Schub-Schreitschritt bezeichnen wollen, geht wie folgt vonstatten:

Der Fahrzeuglenker bringt die Schreitbeine mit Hilfe von zwei Einzelschritten in eine möglichst gestreckte Ausgangslage, ohne dabei das Fahrzeugchassis zu bewegen. Wenn die Pratzen (45, 45') genügend Bodenhaftung gefunden haben, schwenkt der Lenker die Schwingarme nach vorne beziehungsweise nach unten, und danach blockiert er durch Feststellen die beiden Räder (6, 6').

Das Fahrzeug ist jetzt bereit für den Schubschreitschritt. Dabei zieht sich das Fahrzeug mit beiden Beinen abgestützt nach vorne, während die Schwingarme mit den festgestellten Rädern nach hinten beziehungsweise oben bewegt werden. So unterstützen die gebremsten Räder die Vorwärtsbewegung des Fahrzeuges.

Bei diesem Schub-Schreitschritt wird die automatische Horizontierung des Fahrzeugrahmens ausgeschaltet, und der Fahrzeuglenker steuert die Stabilitätslage und die Fahrzeugbewegung manuell.

Der Schub-Schreitschritt eignet sich besonders zum Überwinden grosser Geländesteigungen, weil sich in dieser Situation die vertikale Komponente des Fahrzeuggewichtes nach hinten zu den Rädern hin verschiebt.

Dieser Schub-Schreitschritt ist auch nützlich, wenn sich das Fahrzeug auf weichem oder morastigem Untergrund bewegt.

In solchen Fällen kann es auch von Vorteil sein, die Räder abzunehmen und durch Gleitkufen zu ersetzen. Die Kufen können mit Mitteln versehen sein, die ein Rückwärtsgleiten verhindern. Bei dem oben beschriebenen Schub-Schreitschritt ist die Verwendung von Kufen von besonderem Vorteil, weil dann die Operation des wechselweisen Feststellens und Lösens der Bremse oder Feststellvorrichtung wegfällt.

## Patentansprüche

1. Geländegängiges Fahrzeug für schreitende Fortbewegung, mit einer fahrzeugeigenen Energiequelle, welche die zur Steuerung und Fortbewegung des Fahrzeuges erforderliche, sowie für den Antrieb von Anbau- oder Aufsattel-Arbeitsgeräten benötigte Energie liefert, gekennzeichnet durch einen Rahmen (1), an dem hinten zwei, mittels Schwingarmen (5) am Rahmen angelenkte, je für sich höhenverstellbare antriebslose brems- oder arretierbare Räder (6) angebracht sind, während vorne am Rahmen zwei antreibbare, je mindestens drei Freiheitsgrade der Bewegung aufweisende Schreitbeine (4, 4') angelenkt sind, die normalerweise von einem Fahrer mittels Handsteuerung über proportionale Bewegungs- und Kraftverstärker wechselweise bewegbar sind, wobei die Steuerung ausnahmsweise von einem Bordcomputer (COMP) übernommen werden kann, der mindestens folgende Aufgaben erfüllt:

a) eine Steuerung einer individuellen Höhenverstellung der Räder (6), nach Massgabe der Lagestabilität des Fahrzeuges,

b) eine Sperrung der Bewegung eines oder beider Schreitbeine, solange bis eine stabile Lage mit einem bestimmten Auflagedruck auf dem Gelände erreicht ist,

c) ausführen einer Stabilitätsberechnung an Hand der jeweiligen Dreipunkt-Abstützung, nämlich des Auflagedruckes der Räder und des stützenden Schreitbeines, an Hand wovon er das Anheben des andern Schreitbeines freigibt oder sperrt,

d) ausführen verschiedener Schreitarten nach gespeichertem Programm.

2. Fahrzeug nach Anspruch 1, dadurch gekennzeichnet, dass jedes Schreitbein (4) einen mittels eines Doppelgelenkes (41, 42) am Rahmen (1) befestigten Oberschenkel (40), hat der diesem eine Schwenkung um eine vertikale die Fahrtrichtung bestimmende Achse und eine Schwenkung um eine horizontale Achse erlaubt, und einem am Ende des Oberschenkels angelenkten Unterschenkel (43) besitzt, der um eine horizontale Achse schwenkbar ist.

3. Fahrzeug nach Anspruch 2, dadurch gekennzeichnet, dass der Unterschenkel (46) des Schreitbeines einen zusätzlichen Freiheitsgrad in Form eines in seiner Längsrichtung ausfahrbaren Teiles (47) hat (Figur 3).

4. Geländefahrzeug nach Anspruch 1, dadurch gekennzeichnet, dass der Rahmen (1) um eine parallel zu den Radachsen verlaufende Achse knick-verstellbar ist.

5. Fahrzeug nach Anspruch 1, dadurch gekennzeichnet, dass dessen Handsteuerorgane für jedes Schreitbein (4) eine, seitlich eines Führersitzes angeordnete, um ein hinteres Gelenk (82) mit horizontaler Achse in der Verlängerung der Ellbogengelenkachse des Fahrzeuglenkers schwenkbare Unterarm-Auflage (81) umfasst, an der vorne ein um eine zweite horizontale Gelenkachse (85) schwenkbarer Handgriff (84) angebracht ist, wobei im hinteren Gelenk ein Drehwinkel-Signalgeber (82) für die Auf- und Abwärtsbewegung des Oberschenkels des Schreitbeines - und im vorderen Gelenk des Handgriffes ein Drehwinkel-Signalgeber (85) für die Vorwärts- und Rückwärtsbewegung des Unterschenkels des Schreitbeines untergebracht ist.

6. Fahrzeug nach Anspruch 5, dadurch gekennzeichnet, dass für die links-rechts Schwenkung des Schrittbeines Druckknöpfe oder ein Kippschalter (86) am Handgriff angebracht sind.

7. Fahrzeug nach Anspruch 5, dadurch gekennzeichnet, dass die Unterarm-Auflage ein um eine vertikale Achse (83) schwenkbares Gelenk umfasst, in dem ein Drehwinkel Signalgeber (83') für die links-rechts Schwenkung des Schreitbeines untergebracht ist.

8. Fahrzeug nach Anspruch 1, dadurch gekennzeichnet, dass an den fahrzeugeigenen Gelenken (41, 42, 44, 51) Rückmeldeorgane der jeweiligen Winkellage angeordnet sind.

9. Fahrzeug nach Anspruch 1, dadurch gekennzeichnet, dass an den der Fortbewegung oder Höhenverstellung dienenden Antriebsorganen (70 - 74) Rückmeldeorgane angebracht sind.

10. Fahrzeug nach Anspruch 9, dadurch gekennzeichnet, dass die Rückmeldeorgane mit den Hydraulikzylindern (70 - 73) integrierte Längenmessorgane sind.

11. Fahrzeug nach Anspruch 1, dadurch gekennzeichnet, dass die fahrzeugeigene Energiequelle mindestens eine Hydraulikanlage mit Druckspeicher (HS)-Vorratsbehälter (VT) und einer von einem Verbrennungsmotor (M) an getriebene Pumpe (P) umfasst, und dass die Antriebsorgane hydraulische Einzelantriebe (70 - 74) sind.

12. Fahrzeug nach Anspruch 1, dadurch gekennzeichnet, dass die der Regelung der Horizontallage des Rahmens dienenden Organe zwei kontaktlose, ölgedämpfte Pendel-Potentiometer (Q, L) umfassen.

13. Fahrzeug nach Anspruch 1, dadurch gekennzeichnet, dass mindestens die Schwingarme (5) mit den Rädern (6) wenn die Letztgenannten festgestellt oder gebremst sind, gemeinsam mit den Schreitbeinen betätigbar sind.

14. Fahrzeug nach Anspruch 1, dadurch gekennzeichnet, dass die Räder durch um die Radachse schwenkbare Kufen ersetzbar sind.

**Claims**

1. Cross-country vehicle for stepwise locomotion with its own power source which supplies the power required for the control and locomotion of the vehicle and for driving externally-mounted or saddle-mounted working equipment, characterized by a frame (1) to the rear of which are attached, by means of swing arms (5) coupled to the frame, two undriven wheels (6) each of which is adjustable for height and can be braked or locked, while coupled to the front of the frame are two driven walking legs (4, 4') which each have at least three degrees of freedom of movement and which are normally moved alternately by a driver by means of a hand control system through proportional motion and power booster units, in which, by way of exception, the control can be undertaken by an onboard computer (COMP) which fulfills at least the following duties:

a) control of the individual height adjustment of the wheels (6), subject to the positional stability of the vehicle,

b) blocking of the movement of one or both of the walking legs until a stable position with a certain bearing pressure on the ground is achieved,

c) execution of a stability calculation on the basis of the current three-point support, i.e. the bearing pressures of the wheels and of the supporting walking leg, on which basis lifting of the other walking leg is permitted or blocked,

d) execution of various types of steps in accordance with a stored program.

2. Vehicle according to Claim 1, characterized in that each walking leg (4) has an upper arm (40) which is attached to the frame (1) by means of a double joint (41, 42) and which allows it to slew about a vertical axis, which determines the direction of travel, and to slew about a horizontal axis, and has a lower arm (43) which is coupled to the end of the upper arm and which can slew about a horizontal axis.

3. Vehicle according to Claim 2, characterized in that the lower arm (46) of the walking leg has an additional degree of freedom in the form of member (47) which can be extended in its longitudinal direction (Fig. 3).

4. Cross-country vehicle according to Claim 1, characterized in that the frame (1) can be adjusted for misalignment about an axis running parallel to the wheel axles.

5. Vehicle according to Claim 1, characterized in that its hand control elements for each walking leg (4) each contains a forearm rest (81) which is located at the side of a drivers seat and slews about a rear joint (82) with a horizontal axis in the extension of the elbow-joint axis, and at the front of which is attached a handle (84) which slews about a second horizontal joint axis (85), an angle-of-rotation sensing element (82) for the upward and downward movement of the upper arm of the walking leg being housed in the rear joint and an angle-of-rotation sensing element (85) for the forward and backward movement of the lower arm of the walking leg being housed in the front joint of the handle.

6. Vehicle according to Claim 5, characterized in that push-buttons or a rocker switch (86) are housed in the handle for left-right slewing of the walking leg.

7. Vehicle according to Claim 5, characterized in that the forearm rest contains a joint which slews about a vertical axis (83) and in which is housed an angle-of-rotation sensing element (83') for the left-right slewing of the walking leg.

8. Vehicle according to Claim 1, characterized in that feedback elements for the current angular position are located at the vehicle's own joints (41, 42, 44, 51).

9. Vehicle according to Claim 1, characterized in that feedback elements are housed in the drive elements (70 - 74) serving the forward movement or height adjustment.

10. Vehicle according to Claim 9, characterized in that the feedback elements are length-measuring elements integral with the hydraulic cylinders (70 - 73).

11. Vehicle according to Claim 1, characterized in that the vehicle's own power source contains at least one hydraulic plant with accumulator (HS), reservoir (VT) and a pump (P) driven by an internal combustion engine (M), and in that the drive elements are individual hydraulic drives (70 - 74).

12. Vehicle according to Claim 1, characterized in that the elements serving the control system for the horizontal position of the frame are two contactless, oil-damped, pendulum potentiometers (Q, L).

13. Vehicle according to Claim 1, characterized in that at the least the swing arms (5) with the wheels (6) can be moved jointly with the walking legs if the said wheels are locked or braked.

14. Vehicle according to Claim 1, characterized in that the wheels can be replaced by skids which can slew about the wheel axles.

**Revendications**

1. Véhicule tout-terrain se déplaçant par pas, muni d'une source d'énergie autonome fournissant l'énergie nécessaire à la commande et au déplacement du véhicule, ainsi que l'énergie requise pour l'entraînement d'outils de culture ou d'attelage, caractérisé en ce qu'il comprend un châssis (1), auquel sont assujetties, à l'arrière deux roues (6) non motrices, pouvant être freinées ou bloquées, fixées au châssis avec articulation au moyen de biellettes ou bras oscillants (5) et réglables en hauteur séparément tandis qu'à l'avant sont fixées au châssis avec articulation deux jambes de soutien se déplaçant par pas, présentant chacune au moins trois degrés de liberté de mouvement, et qui peuvent normalement être déplacées, alternativement, par un conducteur au moyen d'une commande manuelle, par l'intermédiaire d'amplificateurs proportionnels de mouvement et de puissance, tandis que la commande peut être assurée exceptionnellement par un ordinateur de bord (COMP) remplissant au moins les fonctions suivantes:

a) commande de déplacement individuel en hauteur des roues (6) pour assurer la stabilité en position du véhicule,

b) arrêt du déplacement de l'une des jambes ou des deux jusqu'à ce que soit atteinte une position stable avec une pression d'appui déterminée sur le terrain, '

c) exécution d'un calcul de stabilité fondé à chaque fois sur l'appui en trois points, a savoir la pression d'appui des roues et de la jambe de soutien, en fonction duquel il libère ou bloque le relèvement de l'autre jambe,

d) exécution de différents types de déplacements par pas selon un programme enregistré.

2. Véhicule selon la revendication 1, caractérisé en ce que chaque jambe (4) comporte une branche supérieure fixée au châssis (1) au moyen d'une double articulation (41, 42)) permettant son pivotement autour d'un axe vertical déterminant le sens de la marche et autour d'un axe horizontal, et possède une branche inférieure (43) fixée avec articulation à l'extrémité de la branche supérieure et pivotant autour d'un axe horizontal.

3. Véhicule selon la revendication 2, caractérisé en ce que la branche inférieure (46) de la jambe possède un degré de liberté supplémentaire, sous la forme d'une partie (47) téléscopique longitudinalement (Figure 3).

4. Véhicule tout-terrain selon la revendication 1, caractérisé en ce que le châssis (1) est réglable par déformation selon un axe parallèle à l'essieu.

5. Véhicule selon la revendication 1, caractérisé en ce que son organe de commande manuelle comporte pour chaque jambe (4) un support d'avant-bras (81) disposé sur le côté d'un siège de conducteur et pouvant pivoter autour d'une articulation postérieure (82) ayant un axe horizontal dans le prolongement de l'axe de l'articulation du coude, et à l'avant duquel est, fixée une poignée (84) articulée autour d'un second axe d'articulation horizontal (85), tandis qu'est placé dans l'articulation postérieure un connecteur tournant (82) pour faire monter et descendre l'articulation supérieure de la jambe et dans l'articulation antérieure de la poignée un connecteur tournant (85) pour faire avancer et reculer l'articulation inférieure de la jambe.

6. Véhicule selon la revendication 5, caractérisé en ce que la poignée comporte des boutons-poussoirs ou un interrupteur à bascule (86) pour le pivotement de la jambe vers la gauche ou vers la droite.

7. Véhicule selon la revendication 5, caractérisé en ce que le support d'avant-bras comporte une articulation mobile autour d'un axe vertical (83), dans laquelle est place un connecteur tournant (83') pour le pivotement de la jambe vers la gauche et vers la droite.

8. Véhicule selon la revendication 1, caractérisé en ce que les articulations propres au véhicule (41, 42, 44, 51) sont munies d'organes répétiteurs de la position angulaire respective.

9. Véhicule selon la revendication 1, caractérisé en ce que les organes de commande (70 - 74) servant au déplacement ou au réglage de la hauteur sont munis d'organes répétiteurs.

10. Véhicule selon la revendication 9, caractérisé en ce que les organes répétiteurs sont des organes de mesure de longueur intégrés dans les cylindres hydrauliques (70 - 73).

11. Véhicule selon la revendication 1, caractérisé en ce que la source d'énergie autonome comprend au moins une installation hydraulique avec un accumulateur de pression (HS) - réservoir (VT) et une pompe (P) actionnée par un moteur à combustion (M), et que les organes d'entraînement sont des dispositifs hydrauliques élémentaires (70 - 74).

12. Véhicule selon la revendication 1, caractérisé en ce que les organes servant au réglage de la position horizontale du châssis comporte deux potentiomètres pendulaires (Q, L) sans contact, à amortisseur à huile.

13. Véhicule selon la revendication 1, caractérisé en ce qu'au moins les biellettes ou bras oscillants (5) peuvent être manoeuvrées, en même temps que les jambes, avec les roues (6) lorsque ces dernières sont bloquées ou freinées.

14. Véhicule selon la revendication 1, caractérisé en ce que les roues peuvent être remplacées par des patins orientables autour de l'essieu.

Fig.1

Fig. 2

Fig. 2a

Fig. 3

Fig. 4